# EUROPEAN PATENT SPECIFICATION

(11) **EP 2 065 348 B1**
(45) Date of publication and mention of the grant of the patent: **16.06.2010**
(21) Application number: 08253566.7
(22) Date of filing: 30.10.2008
(51) Int. Cl.: C03C 8/16, C09K 11/00, C23C 28/00

(54) **Paste composition for plasma display device and associated methods**
Pastenzusammensetzung für ein Plasmaanzeigegerät und damit verbundene Verfahren
Composition de pâte pour dispositif d'affichage à plasma et procédés correspondants

(30) Priority: 30.10.2007 KR 20070109507
(43) Date of publication of application: 03.06.2009
(73) Proprietor: Samsung SDI Co., Ltd., Suwon-si, Gyeonggi-do (KR); Industry-University Cooperation Foundation, Seoul (KR)
(72) Inventor: Ku, Hui-Young, Suwon-si Gyeonggi-do (KR); Kim, Ki-Jun, Suwon-si Gyeonggi-do (KR); Lee, Yoo-Jung, Suwon-si Gyeonggi-do (KR); Seo, Na-Ri, Suwon-si Gyeonggi-do (KR); Paik, Un-Gyu, Suwon-si Gyeonggi-do (KR); Cho, Chae-Woong, Suwon-si Gyeonggi-do (KR)
(74) Representative: Mounteney, Simon James

(56) References cited:
- US-A1- 2006 281 624
- DATABASE WPI Week 200530 Thomson Scientific, London, GB; AN 2005-288243 XP002520075 & JP 2005 078948 A (MATSUSHITA DENKI SANGYO KK) 24 March 2005 (2005-03-24)

## Description

### BACKGROUND OF THE INVENTION

### 1. Field of the Invention

The present invention relates to a paste composition for a plasma display device, and more particularly, to a paste composition that may provide excellent dispersion properties. The present invention also provides the use of the paste composition to form any one of a phosphor layer, barrier ribs, a dielectric layer or an electrode for a plasma display device, as well as a plasma display device comprising the paste composition.

### 2. Description of the Related Art

A plasma display device includes a plasma display panel (PDP) that forms an image by exciting phosphor with vacuum ultraviolet (VUV) light generated by gas discharge in discharge cells. The PDP enables a wide screen with a high resolution, and has been spotlighted as a next-generation flat panel display.

In the PDP, inorganic material layers, e.g., phosphor layers, electrode layers, etc., may be formed using a paste composition. The paste composition may include inorganic particles, a binder, and a solvent. However, obtaining a desired degree of dispersion stability of the inorganic particles during fabrication of the plasma display panel may be difficult. Accordingly, there is a need for advances in the development of suitable paste compositions.

US 2006/0281624 discloses a paste composition containing a mix of dispersants including a dispersant containing a hydrophilic moiety having an acidic functional group, and a dispersant containing a hydrophilic moiety having a basic functional group.

### SUMMARY OF THE INVENTION

The present invention is therefore directed to a paste composition for a plasma display device, which substantially overcomes one or more of the problems due to the limitations and disadvantages of the related art.

It is therefore a feature of the present invention to provide a paste composition for a plasma display device in which a composite dispersant is used.

At least one of the above and other features and advantages may be realized by providing a composition for a plasma display device, including inorganic material particles, a composite of an acidic dispersant and a basic dispersant, a binder, and a solvent. The acidic dispersant and basic dispersant are present in an acidic dispersant:basic dispersant weight ratio of about 25:75 to about 75:25.

The acidic dispersant and basic dispersant are preferably present in an acidic dispersant:basic dispersant weight ratio of about 60:40 to about 40:60. The composite dispersant is preferably present in an amount of about 1 part by weight to about 10 parts by weight, based on the total 100 parts by weight of the inorganic material particles in the composition. The composite dispersant is more preferably present in an amount of about 2 parts by weight to about 5 parts by weight, based on the total 100 parts by weight of the inorganic material particles in the composition.

The acidic dispersant preferably includes one or more of a carboxylic acid group, a phosphoric acid group, or a sulfonic acid group as an acidic group. The basic dispersant preferably has an amine group as a basic group. The acidic dispersant is preferably an oligomer or a polymer having a number average molecular weight of about 300 to about 10,000 g/mol. The basic dispersant is preferably an oligomer or a polymer having a number average molecular weight of about 300 to about 10,000 g/mol.

The inorganic material particles preferably include one or more of a phosphor, a dielectric material, or a conductor. The inorganic material particles most preferably include a phosphor.

At least one of the above and other features and advantages may also be realized by providing a method of fabricating a plasma display device, including forming a plasma display panel including a patterned inorganic material layer, and coupling at least one driver to the plasma display panel. Forming the patterned inorganic material layer may include forming a material layer using a paste composition that includes inorganic material particles, a composite of an acidic dispersant and a basic dispersant, a binder, and a solvent, drying the material layer, and patterning the material layer.

The present invention also provides the use of the paste composition to form any one of a phosphor layer, barrier ribs, a dielectric layer or an electrode for a plasma display device, as well as a plasma display device comprising the paste composition.

The above and other features of the invention are set out in the appended claims.

### BRIEF DESCRIPTION OF THE DRAWINGS

The above and other features and advantages will become more apparent to those of ordinary skill in the art by describing in detail example embodiments with reference to the attached drawings, in which:
FIG. 1 illustrates a graph of adsorption amounts of a dispersant for a phosphor in paste compositions of Comparative Examples 2 through 6, 8, 10, 12, and 13;
FIG. 2 illustrates a graph of adsorption amounts of a dispersant for a phosphor in paste compositions of Examples 2 through 4 and Reference Examples 1 and 2;
FIG. 3 illustrates a graph of viscosity of paste compositions of Example 1, and Comparative Examples 1, 5, and 11;
FIG. 4 illustrates a graph of viscosity of paste compositions of Examples 1 through 4, Reference Example 2, and Comparative Examples 1, 3, 5, 7, and 9;
FIG. 5 illustrates a graph of viscosity of paste compositions of Examples 1, 5 to 8, and Comparative Examples 5 and 11;
FIG. 6 illustrates a graph of viscosity of paste compositions of Examples 9 to 11, and Comparative Examples 5 and 14;
FIG. 7 illustrates a graph of viscosity of paste compositions of Examples 12 to 14, and Comparative Examples 1 and 5;
FIG. 8 illustrates a graph of viscosity of paste compositions of Example 15, and Comparative Examples 15 and 16; and
FIG. 9 illustrates a graph of viscosity of paste compositions of Example 16, and Comparative Examples 17 and 18; and
FIG. 10 illustrates a method of fabricating a plasma display device according to an embodiment.

### DETAILED DESCRIPTION OF THE INVENTION

Preferred embodiments will now be described more fully hereinafter with reference to the accompanying drawings; however, they may be embodied in different forms and should not be construed as limited to the embodiments set forth herein. Like reference numerals refer to like elements throughout.

As used herein, the expressions "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C" and "A, B, and/or C" includes the following meanings: A alone; B alone; C alone; both A and B together; both A and C together; both B and C together; and all three of A, B, and C together. Further, these expressions are open-ended, unless expressly designated to the contrary by their combination with the term "consisting of." For example, the expression "at least one of A, B, and C" may also include an nth member, where n is greater than 3, whereas the expression "at least one selected from the group consisting of A, B, and C" does not.

As used herein, the expression "or" is not an "exclusive or" unless it is used in conjunction with the term "either." For example, the expression "A, B, or C" includes A alone; B alone; C alone; both A and B together; both A and C together; both B and C together; and all three of A, B and, C together, whereas the expression "either A, B, or C" means one of A alone, B alone, and C alone, and does not mean any of both A and B together; both A and C together; both B and C together; and all three of A, B and C together.

As used herein, the terms "a" and "an" are open terms that may be used in conjunction with singular items or with plural items. For example, the term "a solvent" may represent a single compound, e.g., ethanol, or multiple compounds in combination, e.g., ethanol mixed with texanol.

As used herein, molecular weights of oligomeric and polymeric materials are number average molecular weights, and weight percentage (wt %) is relative to the amount of inorganic material particles, unless otherwise indicated.

A first aspect of the present invention provides a paste composition useful for fabricating a PDP of a plasma display device. The paste composition includes inorganic material particles, as well as a composite dispersant including an acidic dispersant and a basic dispersant. The paste composition also includes a binder and a solvent.

The composite of acidic and basic dispersants provides an excellent synergic dispersion of the inorganic material particles as compared to an acidic or basic dispersant alone. The excellent dispersion allows the paste composition according to the present invention to include a higher solid content of phosphor, which may result in improved luminous efficiency of the PDP. The composite of the acidic and basic dispersants may be employed to increase the solid content in various compositions, e.g., a paste composition for a dielectric layer, a paste composition for a barrier rib, or a paste composition for an electrode.

The composite of acidic and basic dispersants in the paste composition function together as a dispersant that may be strongly adsorbed on the surface of the inorganic material particles, regardless of whether the inorganic material particles exhibit acidic or basic characteristics. Accordingly, the paste composition according to the present invention can provide high dispersion of a variety of inorganic material particles.

In general, a dispersant may be adsorbed on the surface of a dispersed material and thereby stabilize the material, e.g., inorganic material particles, when suspended in a solvent. The degree of adsorption of the dispersant on the material surface may depend on the acidity or basicity of the dispersant, and may depend on the acidity or basicity of the surface of the material that is to be dispersed. For example, when a dispersed material is basic on its surface, an acidic dispersant may exhibit a strong affinity for the dispersed material. However, a basic dispersant may exhibit a strong repulsion for the dispersed material that is basic on its surface, in which case the material may not be well dispersed. Thus, there can be significantly different dispersion results when using either an acidic or a basic dispersant, depending on the property of the surface of the material being dispersed.

According to the present invention, both acidic and basic dispersants are present in order to have high affinity between the composite dispersant and the material to be dispersed. Thus, dispersion of inorganic material particles may be improved regardless of whether the dispersed material is acidic or basic. In addition, the acidic and basic dispersants form a composite that is physically combined through mutual interaction. Thus, the composite may exhibit synergistic effects that provide advantages superior to those afforded by the individual acidic and basic dispersants. For example, the composite may exhibit a reduced viscosity, which may further improve dispersion efficiency.

In one embodiment, the composite of the acidic dispersant and the basic dispersant includes one or more oligomeric or polymer materials as acidic and basic dispersants. For the acidic dispersant and/or the basic dispersant, the oligomer or polymer preferably has a number average molecular weight of about 300 to about 20,000 g/mol. In a particular embodiment, the acidic dispersant and/or the basic dispersant is an oligomer or polymer having a number average molecular weight of about 500 to about 5,000 g/mol.

Although other embodiments of the invention include oligomers or polymers having a number average molecular weight outside of the above ranges, these will often be preferred.

Using an oligomer or polymer having a number average molecular weight of about 300 g/mol or more may help ensure good particle stabilization and dispersion efficiency. Using an oligomer or polymer having a number average molecular weight of about 20,000 g/mol or less may help ensure that little or no carbon remains after a firing process that converts the dried and patterned paste composition into an inorganic material layer, and the elimination of carbon may improve the properties of the PDP.

The oligomer or polymer may include, e.g., an alkyl-based copolymer having an alkyl backbone, an ester-based copolymer, an acrylate-based copolymer, a polyurethane-based copolymer, an alkylol ammonium salt copolymer, an amide-based copolymer, or an acryl block copolymer, as well as other suitable oligomers or polymers.

The acidic dispersant may include an acidic functional group in its oligomer or polymer backbone. The acidic functional group may be, e.g., one or more of a carboxylic acid group, a phosphoric acid group, or a sulfonic acid group. Similarly, the basic dispersant may include a basic functional group, e.g., an amine group or amide group, in its oligomer or polymer backbone.

A specific example of an acidic dispersant that can be used in the present invention is DK15 (RTM) available from Croda Chemicals Europe. Specific examples of basic dispersants that can be used in the present invention include EFKA 4300 (RTM), EFKA 4401 (RTM), EFKA 4050 (RTM) and EFKA 4055 (RTM), which are all available from CIBA, as well as Anti-terra U-100 (RTM), available from BYK-Chemie.

The composite dispersant including the acidic dispersant and the basic dispersant is preferably present in the paste composition in an amount of about 1 part by weight to about 10 parts by weight, based on 100 parts by weight of the inorganic material particles in the paste composition. In a preferred embodiment, the composite dispersant is present in the paste composition in an amount of about 2 to about 5 parts by weight, based on 100 parts by weight of the inorganic material particles in the paste composition.

Although other embodiments may comprise amounts of composite dispersant falling outside of the above ranges, these will often be preferred.

Using about 1 part by weight or more of the composite dispersant generally improves the viscosity of the paste composition as compared to the viscosity provided by a singular acidic dispersant or basic dispersant. Thus, the stability of the particle dispersion may be improved. Using about 10 parts by weight or less of the composite dispersant may provide significant reductions in viscosity of the paste composition. Using more than about 10 parts by weight of the composite dispersant does not generally provide further decreases in viscosity, i.e., the viscosity does not generally decrease further even with additional composite dispersant, and carbon residue may remain after a subsequent firing process, which may negatively impact the properties of the final PDP.

The acidic dispersant and basic dispersant are preferably present in the composite dispersant in an acidic dispersant:basic dispersant weight ratio of about 25:75 to about 75:25. In a preferred embodiment, the acidic dispersant:basic dispersant weight ratio is about 60:40 to about 40:60.

The binder preferably includes a cellulose-based binder, an acryl-based, a butyral-based binder, an alcohol-based binder, or mixtures thereof. The cellulose-based binder may include, e.g., methyl cellulose, ethyl cellulose, propyl cellulose, hydroxymethyl cellulose, hydroxyethyl cellulose, hydroxypropyl cellulose, hydroxyethylpropyl cellulose, or mixtures thereof. The acryl-based binder may include, e.g., polymethyl methacrylate, polyisopropyl methacrylate, polyisobutyl methacrylate, copolymers of acryl-based monomers, etc. The copolymers may be copolymers of, e.g., methyl methacrylate, ethyl methacrylate, propyl methacrylate, butyl methacrylate, hexyl methacrylate, 2-ethyl hexyl methacrylate, benzyl methacrylate, dimethyl amino ethyl methacrylate, hydroxy ethyl methacrylate, hydroxy propyl methacrylate, hydroxy butyl methacrylate, phenoxy 2-hydroxy propyl methacrylate, glycidyl methacrylate, methyl acrylate, ethyl acrylate, propyl acrylate, butyl acrylate, hexyl acrylate, 2-ethyl hexyl acrylate, benzyl acrylate, dimethyl amino ethyl acrylate, hydroxy ethyl acrylate, hydroxy propyl acrylate, hydroxy butyl acrylate, phenoxy 2-hydroxy propyl acrylate, glycidyl acrylate, etc.

The butyral-based binder may include, e.g., polyvinyl butyral. The alcohol-based binder may include, e.g., polyvinyl alcohol.

The amount of binder included in the paste composition may vary depending on the kind of inorganic material particles included therein and the particular process used to coat the paste composition. For example, the amount of binder may be determined so that the paste composition has a good viscosity for coating.

In one embodiment, when the paste composition is a phosphor paste composition having phosphor particles as the inorganic material particles, the binder is included in an amount of about 5 wt% to about 12 wt%. Although the amount of binder may also fall outside of these ranges, they will often be preferred. Using about 5 wt% or more of the binder generally provides the paste composition with a viscosity high enough to simplify preparation. Using about 12 wt% or less generally helps to ensure that the viscosity does not increase so much as to deteriorate the working processes.

The solvent employed in the paste composition may include an alcohol-based solvent, an ether-based solvent, an ester-based solvent, mixtures thereof, etc. The alcohol-based solvent may include, e.g., ethanol, butyl carbitol, texanol, dihydroterpineol, terpineol, mixtures thereof, etc. The ester-based solvent may include, e.g., butyl carbitol acetate (BCA), etc. In an embodiment, the solvent is selected from butyl carbitol (BC), butyl carbitol acetate (BCA), terpineol, or mixtures thereof.

The amount of solvent included in the paste composition may vary, and may be determined so that the paste composition has a viscosity appropriate for coating. The solvent may be included as the remaining amount of the paste composition, i.e., it may be added based on the amount of inorganic material particles, the composite dispersant, and the binder.

In an embodiment, the paste composition is used to form a phosphor layer. In other embodiments, the paste composition is used to form barrier ribs, dielectric layers, or electrodes for a PDP. Accordingly, the inorganic material particles employed in the paste composition may vary depending on the applied fields. Thus, the inorganic material particles may be particles of, e.g., a phosphor, a dielectric material, or a conductor.

The amount of inorganic material particles included in the paste composition is preferably about 5 volume% to about 50 volume%. Providing about 5 volume% or more generally helps to ensure that the desired effects are achieved. For example, when the inorganic material particles are a phosphor, it may help to ensure a high luminous efficiency. Providing about 50 volume% or less generally helps to avoid excessive increases in viscosity.

Where the inorganic material particles are a phosphor, the phosphor may be, e.g. a red phosphor, a green phosphor, or a blue phosphor. The red phosphor may include, e.g., (Y,Gd)BO₃:Eu, Y(P,V)O₄:Eu, (Y,Gd)₂O₃:Eu, Y₂O₃:Eu, or mixtures thereof. The green phosphor may include, e.g., Zn₂SiO₄:Mn, YBO₃:Tb, (Zn,A)₂SiO₄:Mn (wherein A is an alkali metal), or mixtures thereof. The green phosphor may be mixed with one or more other phosphors, e.g., BaAl₁₂O₁₉:Mn, (Ba,Sr,Mg)O·αAl₂O₃:Mn (wherein α is 1 to 23), MgAlₓO_{y}:Mn (wherein x is 1 to 10 and y is 1 to 30), LaMgAlₓO_{y}:Tb,Mn (wherein x is 1 to 14 and y is 8 to 47), and ReBO₃:Tb (wherein Re is at least one rare earth element selected from the group consisting of Sc, Y, La, Ce, and Gd). In the mixed phosphor, the green phosphor may be Zn₂SiO₄:Mn, YBO₃:Tb, (Zn,A)₂SiO₄:Mn (A is an alkali metal). The phosphor may be used in an amount of about 10 wt% to about 70 wt%, based on the total weight of the composition. The blue phosphor may include, e.g., BaMgAl₁₀O₁₇:Eu, CaMgSi₂O₆:Eu, CaWO₄:Pb, Y₂SiO₅:Eu, or mixtures thereof.

Where the inorganic material particles are a dielectric material, the dielectric material may be a material that is generally used in a dielectric layer of a PDP. Examples of the dielectric materials include lead oxide and non-lead oxide low-melting amorphous glass.

The lead oxide or non-lead oxide low-melting amorphous glass may include, e.g., PbO, ZnO, B₂O₃, Al₂O₃, SiO₂, SnO, P₂O₅, Sb₂O₅, BaO, TiO₂, and Bi₂O₅. In an embodiment, lead oxide or non-lead oxide low-melting amorphous glass includes lead oxide-boron oxide-silicon oxide (PbO-B₂O₃-SiO₂), lead oxide-boron oxide-silicon oxide-aluminum oxide (PbO-B₂O₃-SiO₂-Al₂O₃), zinc oxide-boron oxide-silicon oxide (ZnO-B₂O₃-SiO₂), zinc oxide-boron oxide-silicon oxide-aluminum oxide (ZnO-B₂O₃-SiO₂-Al₂O₃), lead oxide-zinc oxide-boron oxide-silicon oxide (PbO-ZnO-B₂O₃-SiO₂), lead oxide-zinc oxide-boron oxide-silicon oxide-aluminum oxide (PbO-ZnO-B₂O₃-SiO₂-Al₂O₃), bismuth oxide-boron oxide-silicon oxide (Bi₂O₃-B₂O₃-SiO₂), bismuth oxide-boron oxide-silicon oxide-aluminum oxide (Bi₂O₃-B₂O₃-SiO₂-Al₂O₃), bismuth oxide-zinc oxide-boron oxide-silicon oxide (Bi₂O₃-ZnO-B₂O₃-SiO₂), bismuth oxide-zinc oxide-boron oxide-silicon oxide-aluminum oxide (Bi₂O₃-ZnO-B₂O₃-SiO₂-Al₂O₃), zinc oxide-silicon oxide (ZnO-SiO₂), and/or bismuth oxide-silicon oxide (Bi₂O₃-SiO₂).

The paste composition may further include one or more additives in order to improve flow and process characteristics. The additive may include a photosensitizer such as benzophenone and the like, a silicon-based antifoaming agent, a rheology modifier, a plasticizer, and an antioxidant, which are all commercially available and the selection of which may be readily determined by one of skill in the art. They may be used singularly or in combination.

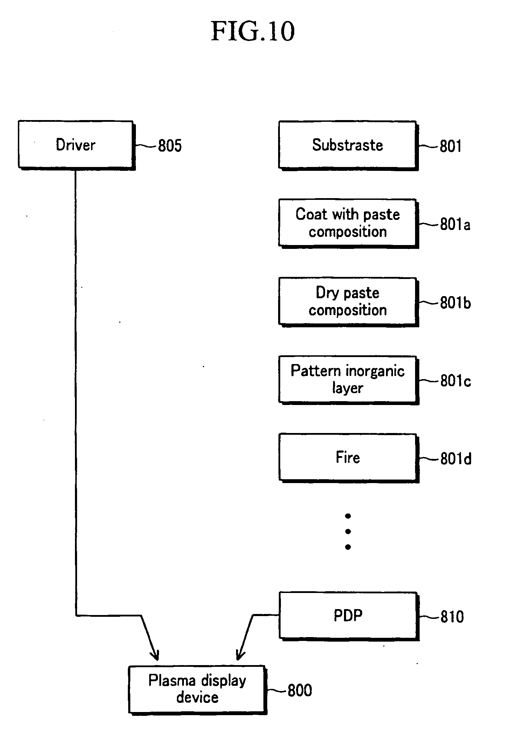

In a further aspect, the paste composition described above may be employed in the fabrication of a plasma display device. Referring to FIG. 10, the fabrication of the plasma display device 800 may include, e.g., forming a PDP 810 including a patterned inorganic material layer, and coupling at least one driver 805 to the PDP 810. Forming the patterned inorganic material layer may include forming a material layer on a substrate 801 using a paste composition according to an embodiment (operation 801 a). The paste composition may include, e.g., inorganic material particles, the composite of the acidic and basic dispersants, a binder, and a solvent. The coated material layer may be dried (operation 801 b), e.g., by baking, and patterned (operation 801 c). Patterning may be, e.g., a lithographic process or direct application in predetermined locations, e.g., using a printing method, a mask, etc. In an embodiment, the patterned material layer may then be fired (operation 801d), which may volatilize and/or decompose the organic components thereof. Additional operations may be performed, e.g., combining the substrate 801 with an opposing substrate, etc., to complete the PDP 810.

The following Examples and Comparative Examples are provided in order to set forth particular details of one or more embodiments. However, it will be understood that the embodiments are not limited to the particular details described.

### Example 1

BaMgAl₁₀O₁₇:Eu as a blue phosphor, a composite dispersant including a carboxyl-containing alkyl polymer having a number average molecular weight of 370 g/mol (KD15 available from Croda Chemicals Europe) as an acidic dispersant and an amine-containing acryl block copolymer having a number average molecular weight of 8,500 g/mol (EFKA 4300 available from CIBA) as a basic dispersant, and ethyl cellulose as a binder were mixed in a mixed solvent of terpineol/butyl carbitol acetate (3:7 volume ratio) to prepare a blue phosphor paste composition.

The blue phosphor, the composite dispersant, and the binder were respectively used in amounts of 40 wt%, 0.8 wt%, and 6 wt%, based on the weight of the entire paste composition, and the solvent was used for the balance. As a result, the composite dispersant was used in an amount of 2 parts by weight based on 100 parts by weight of the blue phosphor. In the composite dispersant, the acidic dispersant and basic dispersant were used in a weight ratio of 50:50.

The phosphor paste composition was applied on a discharge cell and was subjected to baking to form a blue phosphor layer, and then a PDP was fabricated using generally known operations.

### Example 2

A PDP was fabricated according to the same method as in Example 1, except that the composite dispersant was used in an amount of 1.2 wt% based on the total weight of the composition. The amount of the composite dispersant was 3 parts by weight based on 100 parts by weight of the blue phosphor.

### Example 3

A PDP was fabricated according to the same method as in Example 1, except that the composite dispersant was used in an amount of 2 wt% based on the total weight of the composition. The amount of the composite dispersant was 5 parts by weight based on 100 parts by weight of the blue phosphor.

### Example 4

A PDP was fabricated according to the same method as in Example 1, except that the composite dispersant was used in an amount of 4.0 wt% based on the total weight of the composition. The amount of the composite dispersant was 10 parts by weight based on 100 parts by weight of the blue phosphor.

### Example 5

A PDP was fabricated according to the same method as in Example 1, except that, in the composite dispersant, the acidic dispersant and basic dispersant were used in a weight ratio of 75:25.

### Example 6

A PDP was fabricated according to the same method as in Example 1, except that, in the composite dispersant, the acidic dispersant and basic dispersant were used in a weight ratio of 60:40.

### Example 7

A PDP was fabricated according to the same method as in Example 1, except that, in the composite dispersant, the acidic dispersant and basic dispersant were used in a weight ratio of 40:60.

### Example 8

A PDP was fabricated according to the same method as in Example 1, except that, in the composite dispersant, the acidic dispersant and basic dispersant were used in a weight ratio of 25:75.

### Example 9

BaMgAl₁₀O₁₇:Eu as a blue phosphor, a composite dispersant including a carboxyl-containing alkyl polymer having a number average molecular weight of 370 g/mol (KD15 available from Croda Chemicals Europe) as an acidic dispersant and an amide-containing acryl block copolymer having a number average molecular weight of 1,500 g/mol (Anti-terra U-100 available from BYK-Chemie) as a basic dispersant, and ethyl cellulose as a binder were mixed in a mixed solvent of terpineol/butyl carbitol acetate (3:7 volume ratio) to prepare a blue phosphor paste composition.

The blue phosphor, the composite dispersant, and the binder were respectively used in amounts of 40 wt%, 0.8 wt%, and 6 wt%, based on the weight of the entire paste composition, and the solvent was used for the balance. As a result, the composite dispersant was used in an amount of 2 parts by weight based on 100 parts by weight of the blue phosphor. In the composite dispersant, the acidic dispersant and basic dispersant were used in a weight ratio of 75:25.

The phosphor paste composition was applied on a discharge cell and was subjected to baking to form a blue phosphor layer, and then a PDP was fabricated using generally known operations.

### Example 10

A PDP was fabricated according to the same method as in Example 9, except that, in the composite dispersant, the acidic dispersant and basic dispersant were used in a weight ratio of 50:50.

### Example 11

A PDP was fabricated according to the same method as in Example 9, except that, in the composite dispersant, the acidic dispersant and basic dispersant were used in a weight ratio of 25:75.

### Example 12

A PDP was fabricated according to the same method as in Example 9, except that, a composite dispersant including a carboxyl-containing alkyl polymer having a number average molecular weight of 370 g/mol as an acidic dispersant and an amine-containing acryl block copolymer having a number average molecular weight of 20,000 g/mol (EFKA4401 available from CIBA) as a basic dispersant in a weight ratio of 50:50 was used.

### Example 13

A PDP was fabricated according to the same method as in Example 9, except that, a composite dispersant including a carboxyl-containing alkyl polymer having a number average molecular weight of 370 g/mol as an acidic dispersant and an amine-containing acryl block copolymer having a number average molecular weight of 7,000 g/mol (EFKA4050 available from CIBA) as a basic dispersant in a weight ratio of 50:50 was used.

### Example 14

A PDP was fabricated according to the same method as in Example 9, except that, a composite dispersant including a carboxyl-containing alkyl polymer having a number average molecular weight of 370 g/mol as an acidic dispersant and an amine-containing acryl block copolymer having a number average molecular weight of 10,000 g/mol (EFKA4055 available from CIBA) as a basic dispersant in a weight ratio of 50:50 was used.

### Example 15

A PDP was fabricated according to the same method as in Example 1, except that a (Y,Gd)BO₃: Eu red phosphor was used instead of the blue phosphor.

### Example 16

A PDP was fabricated according to the same method as in Example 1, except that a Zn₂SiO₄:Mn green phosphor was used instead of the blue phosphor.

### Example 17

A PDP was fabricated according to the same method as in Example 1, except that a phosphoric acid-containing alkyl polymer having a number average molecular weight of 370 g/mol was used instead of the carboxyl-containing alkyl polymer having a number average molecular weight of 370 g/mol..

### Example 18

A PDP was fabricated according to the same method as in Example 1, except that a sulfonic acid-containing alkyl polymer having a number average molecular weight of 370 g/mol was used instead of the carboxyl-containing alkyl polymer having a number average molecular weight of 370 g/mol..

### Reference Example 1

A PDP was fabricated according to the same method as in Example 1, except that the composite dispersant was used in an amount of 0.2 wt% based on the total weight of the composition. The amount of the composite dispersant was 0.5 parts by weight based on 100 parts by weight of the blue phosphor.

### Reference Example 2

A PDP was fabricated according to the same method as in Example 1, except that the composite dispersant was used in an amount of 0.4 wt% based on the total weight of the composition. The amount of the composite dispersant was 1 part by weight based on 100 parts by weight of the blue phosphor.

### Comparative Example 1

A PDP was fabricated according to the same method as in Example 1, except that a dispersant was not used.

### Comparative Example 2

A PDP was fabricated according to the same method as in Example 1, except that only the carboxyl-containing alkyl polymer having a number average molecular weight of 370 g/mol as an acidic dispersant was used, and the acidic dispersant was used in an amount of 0.5 parts by weight based on 100 parts by weight of the blue phosphor.

### Comparative Example 3

A PDP was fabricated according to the same method as in Example 1, except that only the carboxyl-containing alkyl polymer having a number average molecular weight of 370 g/mol as an acidic dispersant was used, and the acidic dispersant was used in an amount of 1 part by weight based on 100 parts by weight of the blue phosphor.

### Comparative Example 4

A PDP was fabricated according to the same method as in Example 1, except that only the carboxyl-containing alkyl polymer having a number average molecular weight of 370 g/mol as an acidic dispersant was used, and the acidic dispersant was used in an amount of 1.5 parts by weight based on 100 parts by weight of the blue phosphor.

### Comparative Example 5

A PDP was fabricated according to the same method as in Example 1, except that only the carboxyl-containing alkyl polymer having a number average molecular weight of 370 g/mol as an acidic dispersant was used, and the acidic dispersant was used in an amount of 2 parts by weight based on 100 parts by weight of the blue phosphor.

### Comparative Example 6

A PDP was fabricated according to the same method as in Example 1, except that only the carboxyl-containing alkyl polymer having a number average molecular weight of 370 g/mol as an acidic dispersant was used, and the acidic dispersant was used in an amount of 2.5 parts by weight based on 100 parts by weight of the blue phosphor.

### Comparative Example 7

A PDP was fabricated according to the same method as in Example 1, except that only the carboxyl-containing alkyl polymer having a number average molecular weight of 370 g/mol as an acidic dispersant was used, and the acidic dispersant was used in an amount of 3 parts by weight based on 100 parts by weight of the blue phosphor.

### Comparative Example 8

A PDP was fabricated according to the same method as in Example 1. except that only the carboxyl-containing alkyl polymer having a number average molecular weight of 370 g/mol as an acidic dispersant was used, and the acidic dispersant was used in an amount of 4 parts by weight based on 100 parts by weight of the blue phosphor.

### Comparative Example 9

A PDP was fabricated according to the same method as in Example 1, except that only the carboxyl-containing alkyl polymer having a number average molecular weight of 370 g/mol as an acidic dispersant was used, and the acidic dispersant was used in an amount of 5 parts by weight based on 100 parts by weight of the blue phosphor.

### Comparative Example 10

A PDP was fabricated according to the same method as in Example 1, except that only the amine-containing acryl block copolymer having a number average molecular weight of 8,500 g/mol as a basic dispersant was used, and the basic dispersant was used in an amount of 0.5 parts by weight based on 100 parts by weight of the blue phosphor.

### Comparative Example 11

A PDP was fabricated according to the same method as in Example 1, except that only the amine-containing acryl block copolymer having a number average molecular weight of 8,500 g/mol as a basic dispersant, and the basic dispersant was used in an amount of 2 parts by weight based on 100 parts by weight of the blue phosphor.

### Comparative Example 12

A PDP was fabricated according to the same method as in Example 1, except that only the amine-containing acryl block copolymer having a number average molecular weight of 8,500 g/mol as a basic dispersant, and the basic dispersant was used in an amount of 3 parts by weight based on 100 parts by weight of the blue phosphor.

### Comparative Example 13

A PDP was fabricated according to the same method as in Example 1, except that only the amine-containing acryl block copolymer having a number average molecular weight of 8,500 g/mol as a basic dispersant, and the basic dispersant was used in an amount of 5 parts by weight based on 100 parts by weight of the blue phosphor.

### Comparative Example 14

A PDP was fabricated according to the same method as in Example 9, except that only the amide-containing acryl block copolymer having a number average molecular weight of 1,500 g/mol as a basic dispersant, and the basic dispersant was used in an amount of 2 parts by weight based on 100 parts by weight of the blue phosphor.

### Comparative Example 15

A PDP was fabricated according to the same method as in Example 15, except that a dispersant was not used.

### Comparative Example 16

A PDP was fabricated according to the same method as in Example 15, except that only the acidic dispersant was used.

### Comparative Example 17

A PDP was fabricated according to the same method as in Example 16, except that a dispersant was not used.

### Comparative Example 18

A PDP was fabricated according to the same method as in Example 16, except that only the acidic dispersant was used.

### Hydrodynamic Radius Measurement

A first test sample was prepared from the acidic dispersant used in Comparative Example 5 and a mixed solvent of terpineol/butyl carbitol acetate having a volume ratio of 3:7.

A second test sample was prepared from the basic dispersant used in Comparative Example 11 and a mixed solvent of terpineol/butyl carbitol acetate having a volume ratio of 3:7.

A third test sample was prepared from the composite dispersant used in Example 1 and a mixed solvent of terpineol/butyl carbitol acetate having a volume ratio of 3:7.

The hydrodynamic radius (a size of a material in a liquid) of the first, second and third test samples was measured in the mixed solvent. The results are provided in the following Table 1.

**Table 1**

| | | Hydrodynamic Radius (nm) |
|---|---|---|
| Comparative Example 5 | acidic dispersant | 10.10 |
| Comparative Example 11 | basic dispersant | 11.70 |
| Example 1 | composite dispersant | 52.51 |

As shown in Table 1, Comparative Example 5 and Comparative Example 11, which included only an acidic or basic dispersant, respectively, had a hydrodynamic radius of around 10 nm. Example 1, which included a composite of an acidic dispersant and a basic dispersant, had a hydrodynamic radius of 52.5 nm. Without being bound by theory, it is believed that the hydrodynamic radius of 52.5 nm indicates that the acidic dispersant and the basic dispersant had an acid/base reaction in the paste composition of Example 1, and thereby formed a new composite.

### Measurement of Adsorption Amount

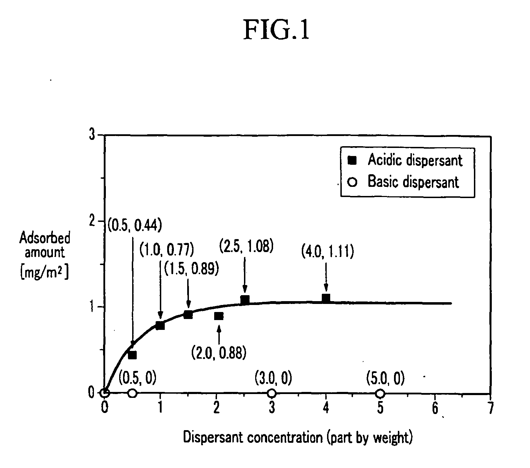

The absorption amount of the dispersant against a blue phosphor for the paste compositions of Comparative Examples 2 though 6, 8, 10, 12, and 13 were measured using a nonaqueous titration method. The results are shown in FIG. 1, which illustrates a graph of adsorption amounts of the dispersant to the phosphor in paste compositions of Comparative Examples 2 to 6 and 8 (only acidic dispersant), and Comparative Examples 10, 12, and 13 (only basic dispersant). In FIG. 1, the horizontal axis indicates dispersant concentration (parts by weight based on the weight of the phosphor), and the vertical axis indicates the adsorbed amount (mg) of dispersant per phosphor specific surface area of 1 m². Thus, each coordinate (x, y) indicates (parts by weight, mg/m²).

Referring to FIG. 1, Comparative Examples 2 to 6 and 8, which included the acidic dispersant, had an adsorbed amount that averaged around 1 mg per phosphor specific surface area of 1m² (0.44 mg/m² for Comparative Example 2, 0.77 mg/m² for Comparative Example 3, 0.89 mg/m² for Comparative Example 4, 0.88 mg/m² for Comparative Example 5, 1.08 mg/m² for Comparative Example 6, and 1.11 mg/m² for Comparative Example 8). Comparative Examples 10, 12, and 13, which included a basic dispersant, each had an adsorbed amount of 0 mg/m². Without being bound by theory, it is believed that this is because the blue phosphor surface has a basic nature, and thus has a high affinity for an acidic dispersant but strong repulsion against a basic dispersant.

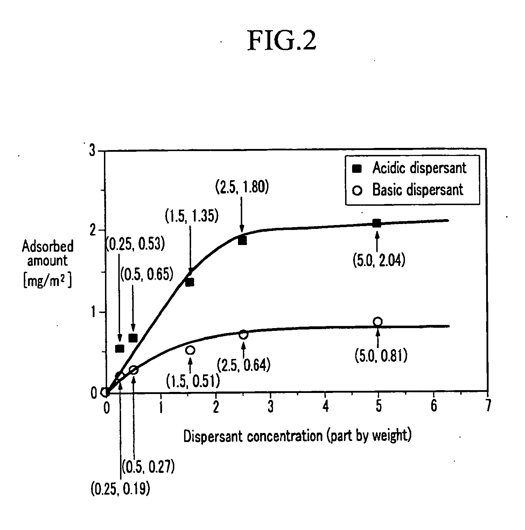

FIG. 2 illustrates a graph of adsorption amounts of the dispersant for the phosphor in paste compositions for Examples 2 through 4 (composite acidic and basic dispersant) and Reference Examples 1 and 2 (composite acidic and basic dispersant in a small amount). In FIG. 2, the horizontal axis indicates a dispersant concentration (parts by weight based on the weight of the phosphor), and the vertical axis indicates the adsorbed amount of dispersant (mg) per phosphor specific surface area of 1 m². Thus, each coordinate (x,y) indicates (parts by weight, mg/m²). To obtain the data shown in FIG. 2, the adsorbed amount of the composite dispersant was measured by measuring the respective adsorbed amounts of the acidic dispersant and the basic dispersant.

Referring to FIG. 2, Examples 2 through 4, which simultaneously included both an acidic dispersant and a basic dispersant, had an increased adsorbed amount of the acidic dispersant (Example 2: 1.35 mg/m², Example 3: 1.80 mg/m², Example 4: 2.04 mg/m²) as compared to the Comparative Examples in which only the acidic dispersant was included. Moreover, as shown in FIG. 2, Examples 2 through 4 also had an increased adsorbed amount of the basic dispersant with respect to the blue phosphor (Example 2: 0.51 mg/m², Example 3: 0.64 mg/m², Example 4: 0.81 mg/m²) as compared to the Comparative Examples in which the basic dispersant was separately used.

In the Reference Examples, when the acidic dispersant and the basic dispersant were simultaneously used, the phosphor was adsorbed on both the acidic dispersant and the basic dispersant, even though the amount of the composite dispersant was respectively 0.5 parts by weight (Reference Example 1) and 1 part by weight (Reference Example 2). However, the adsorbed amounts were significantly reduced (in Reference Example 1, the acidic dispersant was 0.53 mg/m² and the basic dispersant was 0.19 mg/m², and in Reference Example 2, the acidic dispersant was 0.65 mg/m² and the basic dispersant was 0.27 mg/m²).

### Viscosity Measurement

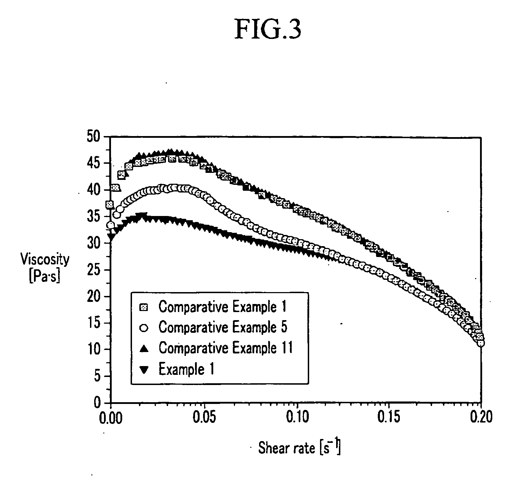

The viscosity as a function of shear rate was measured for the paste compositions of Example 1, and Comparative Examples 1, 5, and 11. The shear rates were varied from 0.01 s⁻¹ to 100 s⁻¹ to measure viscosity. The results are shown in FIG. 3, which illustrates a graph of viscosity with respect to shear rate for the paste compositions of Example 1 and Comparative Examples 1, 5, and 11. In FIG. 3, the x-axis is the shear rate on a log scale.

Referring to FIG. 3, the paste composition of Example 1, which included the composite dispersant, had much lower viscosity than Comparative Examples 1, 5, and 11 over all the shear rates, and was much lower at the lower shear rates. This demonstrates that the composite dispersant of the acidic dispersant and the basic dispersant used together may significantly improve dispersion effectiveness of a phosphor.

### Measurement of Viscosity With Respect To Dispersant Concentration

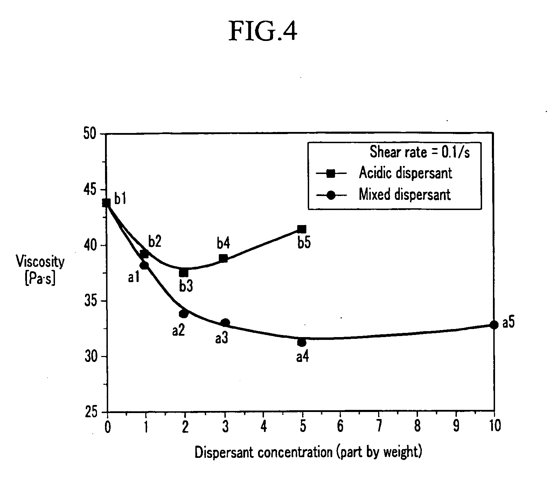

FIG. 4 illustrates a graph of viscosity of paste compositions of Examples 1 through 4 (points a2-a5), Reference Example 2 (point a1), and Comparative Examples 1, 3, 5, 7, and 9 (points b2-b5). Referring to FIG. 4, a1, a2, a3, a4, and a5 marked as • indicate Reference Example 2, Examples 1, 2, 3, and 4, and b1, b2, b3, b4, and b5 marked as ■ respectively indicate Comparative Examples 1, 3, 5, 7, and 9. As shown in FIG. 4, when an acidic and a basic dispersant are used together in the composite dispersant, a higher addition amount of a dispersant may lower the viscosity of the paste composition.

### Measurement of Viscosity With Respect To Mixing Ratio of Acidic and Basic Dispersants

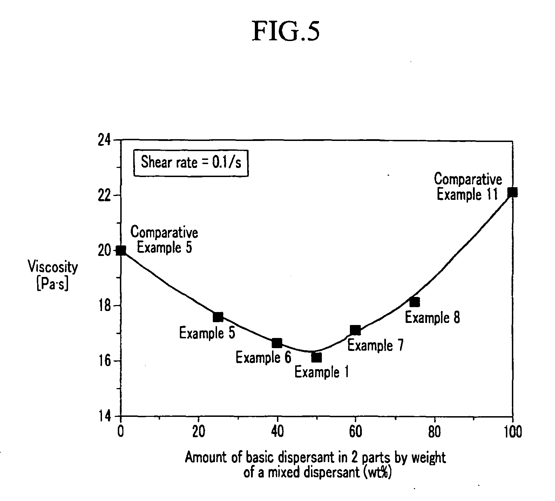

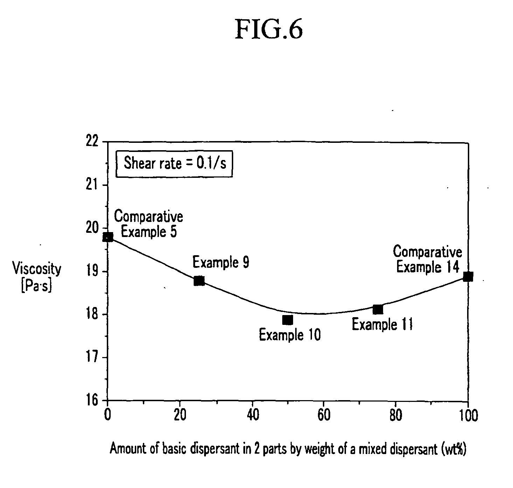

The viscosities of the paste compositions of Examples 1, 5 to 8, and Comparative Examples 5 and 11 were measured with respect to the mixing ratio of the acidic dispersant and the basic dispersant. The results are provided in FIG. 5, which illustrates a graph of viscosity of paste compositions of Examples 1, 5 to 8, and Comparative Examples 5 and 11. Furthermore, the viscosities of the paste compositions of Examples 9 to 11, and Comparative Examples 14 were measured with respect to the mixing ratio of the acidic dispersant and the basic dispersant. The results are provided in FIG. 6, which illustrates a graph of viscosity of paste compositions of Examples 9 to 11, and Comparative Examples 14. The viscosity of paste composition of Comparative Example 5 was repeatedly measured and the results are shown in FIG. 6.

In FIGS. 5 and 6, the x axis indicates the percentage of the basic dispersant in 2 parts by weight of the composite dispersant. For example, where the x-axis indicates the amount of a basic dispersant as 20 wt%, the basic dispersant has a weight ratio of 20:80 with respect to the acidic dispersant in the composite.

Referring to FIGS. 5 and 6, Example 1, which included the acidic dispersant and the basic dispersant in a weight ratio of 1:1, had the lowest viscosity, and accordingly the highest dispersion stability. In addition, the composite of the acidic dispersant and the basic dispersant in the mixing ratio of 25 : 75 to 75 25 weight ratio exhibits lower viscosity than only acidic dispersant or only basic dispersant.

### Measurement of Viscosity With Respect To Type of Basic Dispersants

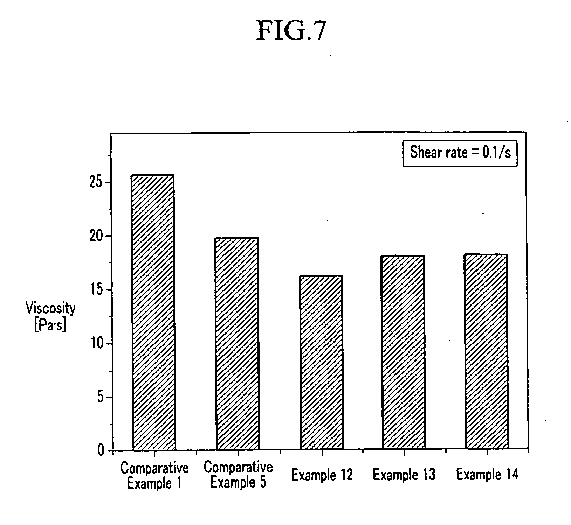

The viscosities of the paste compositions of Examples 12 to 14, and Comparative Examples 1 and 5 were measured. The results are provided in FIG. 7, which illustrates a graph of viscosity of paste compositions of Examples 12 to 14, and Comparative Examples 1 and 5. Referring to FIG. 7, the composites of the acidic dispersant and the basic dispersant exhibits lower viscosities than one without dispersant (Comparative Example 1) or only acidic dispersant (Comparative Example 5), and accordingly the highest dispersion stability.

### Viscosity Measurement of Red and Green Phosphors

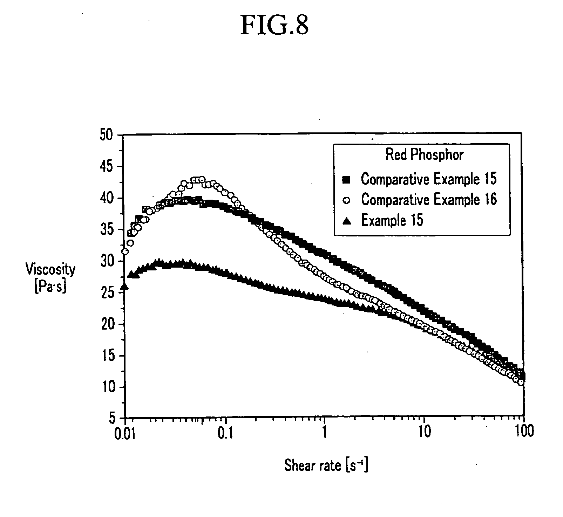

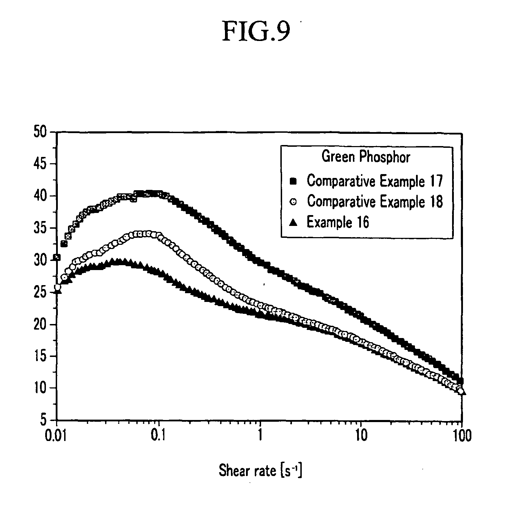

FIG. 8 illustrates a graph of viscosity with respect to shear rate for the paste compositions of Example 15, and Comparative Examples 15 and 16, which included a red phosphor. FIG. 9 illustrates a graph of viscosity with respect to shear rate for the paste compositions of Example 16, and Comparative Examples 17 and 18, which included a green phosphor. In FIGS. 8 and 9, the x-axis indicates the shear rate on a log scale.

Referring to FIGS. 8 and 9, Examples 15 and 16, which included the composite dispersant, exhibited reduced viscosity as compared to Comparative Examples 16 and 18, which included only an acidic dispersant, and as compared to Comparative Examples 15 and 17, which did not include a dispersant. Thus, as evidenced by Examples 15 and 16, paste compositions according to embodiments may provide better dispersion effectiveness. Further, paste compositions according to embodiments may be effective for red and green phosphors, as well as a blue phosphor.

As described above, embodiments may provide a paste composition for a plasma display device and associated methods, in which the paste composition includes inorganic material particles, a composite dispersant including a composite of an acidic dispersant and a basic dispersant, and a binder and solvent. The composite of acidic and basic dispersants may provide excellent and synergistic dispersion as compared to a singular acidic or basic dispersant. The dispersion afforded by the paste composition according to an embodiment may allow the paste composition to include phosphor in a large amount, which may result in improved luminous efficiency of the PDP. The mixed acidic and basic dispersants may be used to form a paste composition for forming a phosphor layer, a dielectric layer, a barrier rib, or an electrode, each of which may exhibit an increased solid content. Therefore, desirable properties of a phosphor layer, a dielectric layer, a barrier rib, or an electrode may be realized.

## Claims

1. A paste composition for a plasma display device, comprising:
inorganic material particles;
a composite of an acidic dispersant and a basic dispersant;
a binder; and
a solvent;
wherein the acidic dispersant and basic dispersant are present in an acidic dispersant:basic dispersant weight ratio of from 25:75 to 75:25.

2. A composition according to claim 1, wherein the acidic dispersant and basic dispersant are present in an acidic dispersant:basic dispersant weight ratio of from 60:40 to 40:60.

3. A composition according to claim 1 or 2, wherein the composite dispersant is present in an amount of from 1 part by weight to 10 parts by weight, based on the total 100 parts by weight of the inorganic material particles in the composition.

4. A composition according to claim 3, wherein the composite dispersant is present in an amount of from 2 parts by weight to 5 parts by weight, based on the total 100 parts by weight of the inorganic material particles in the composition.

5. A composition according to any preceding claim, wherein the acidic dispersant includes one or more of a carboxylic acid group, a phosphoric acid group, or a sulfonic acid group as an acidic group.

6. A composition according to any preceding claim, wherein the basic dispersant has an amine group or an amide group as a basic group.

7. A composition according to any preceding claim, wherein the acidic and/or the basic dispersant is an oligomer or a polymer having a number average molecular weight of from 300 to 20,000 g/mol.

8. A composition according to claim 7, wherein the acidic and/or the basic dispersant is an oligomer or a polymer having a number average molecular weight of from 500 to 5,000 g/mol.

9. A composition according to any preceding claim, wherein the inorganic material particles include one or more of a phosphor, a dielectric material, or a conductor.

10. A composition according to claim 9, wherein the inorganic material particles include a phosphor.

11. A plasma display device comprising a paste composition according to any preceding claim.

12. A plasma display device according to claim 11, wherein the plasma display device is a plasma display panel.

13. Use of a paste composition according to any of claims 1-10 to form any one of a phosphor layer, barrier ribs, a dielectric layer or an electrode for a plasma display panel.

## Patentansprüche

1. Pastenzusammensetzung für eine Plasmaanzeigevorrichtung, umfassend:
Teilchen eines anorganischen Materials;
ein Gemisch aus einem sauren Dispergiermittel und einem basischen Dispergiermittel;
ein Bindemittel; und
ein Lösungsmittel;
wobei das saure Dispergiermittel und das basische Dispergiermittel in einem Gewichtsverhältnis saures Dispergiermittel/basisches Dispergiermittel von 25:75 bis 75:25 vorliegen.

2. Zusammensetzung nach Anspruch 1, wobei das saure Dispergiermittel und das basische Dispergiermittel in einem Gewichtsverhältnis saures Dispergiermittel/basisches Dispergiermittel von 60:40 bis 40:60 vorliegen.

3. Zusammensetzung nach Anspruch 1 oder 2, wobei das zusammengesetzte Dispergiermittel, bezogen auf die gesamten 100 Gewichtsteile der Teilchen des anorganischen Materials in der Zusammensetzung, in einer Menge von 1 Gewichtsteil bis 10 Gewichtsteilen vorhanden ist.

4. Zusammensetzung nach Anspruch 3, wobei das zusammengesetzte Dispergiermittel, bezogen auf die gesamten 100 Gewichtsteile der Teilchen des anorganischen Materials in der Zusammensetzung, in einer Menge von 2 Gewichtsteilen bis 5 Gewichtsteilen vorhanden ist.

5. Zusammensetzung nach einem der vorstehenden Ansprüche, wobei das saure Dispergiermittel eine oder mehrere aus Carbonsäuregruppe, Phosphorsäuregruppe oder Sulfonsäuregruppe als saure Gruppe enthält.

6. Zusammensetzung nach einem der vorstehenden Ansprüche, wobei das basische Dispergiermittel eine Amingruppe oder eine Amidgruppe als basische Gruppe aufweist.

7. Zusammensetzung nach einem der vorstehenden Ansprüche, wobei das saure und/oder basische Dispergiermittel ein Oligomer oder ein Polymer mit einem Zahlenmittel des Molekulargewichts von 300 bis 20 000 g/mol ist.

8. Zusammensetzung nach Anspruch 7, wobei das saure und/oder basische Dispergiermittel ein Oligomer oder ein Polymer mit einem Zahlenmittel des Molekulargewichts von 500 bis 5000 g/mol ist.

9. Zusammensetzung nach einem der vorstehenden Ansprüche, wobei die Teilchen des anorganischen Materials eines oder mehrere aus einem Phosphor, einem dielektrischen Material oder einem Leiter enthalten.

10. Zusammensetzung nach Anspruch 9, wobei die Teilchen des anorganischen Materials einen Phosphor enthalten.

11. Plasmaanzeigevorrichtung, umfassend eine Pastenzusammensetzung nach einem der vorstehenden Ansprüche.

12. Plasmaanzeigevorrichtung nach Anspruch 11, wobei die Plasmaanzeigevorrichtung ein Plasmabildschirm ist.

13. Verwendung einer Pastenzusammensetzung nach einem der Ansprüche 1 bis 10, um jeweils eine Phosphorschicht, Sperrrippen, eine dielektrische Schicht oder eine Elektrode für einen Plasmabildschirm zu bilden.

## Revendications

1. Composition de pâte pour un dispositif d'affichage à plasma, comprenant :
des particules de matériau inorganique ;
un composé d'un dispersant acide et d'un dispersant basique ;
un liant ; et
un solvant ;
dans laquelle le dispersant acide et le dispersant basique sont présents en un rapport en poids de dispersant acide:dispersant basique allant de 25:75 jusqu'à 75:25.

2. Composition selon la revendication 1, dans laquelle le dispersant acide et le dispersant basique sont présents en un rapport en poids de dispersant acide:dispersant basique allant de 60:40 jusqu'à 40:60.

3. Composition selon la revendication 1 ou 2, dans laquelle le dispersant composé est présent en une proportion allant de 1 part en poids jusqu'à 10 parts en poids, sur la base des 100 parts en poids totales des particules de matériau inorganique dans la composition.

4. Composition selon la revendication 3, dans laquelle le dispersant composé est présent en une proportion allant de 2 parts en poids jusqu'à 5 parts en poids, sur la base des 100 parts en poids totales des particules de matériau inorganique dans la composition.

5. Composition selon l'une quelconque des revendications précédentes, dans laquelle le dispersant acide comporte un ou plusieurs groupes parmi un groupe d'acide carboxylique, un groupe d'acide phosphorique, ou un groupe d'acide sulfonique en tant que groupe acide.

6. Composition selon l'une quelconque des revendications précédentes, dans laquelle le dispersant basique a un groupe amine ou un groupe amide en tant que groupe basique.

7. Composition selon l'une quelconque des revendications précédentes, dans laquelle le dispersant acide et/ou basique est un oligomère ou un polymère ayant une masse moléculaire moyenne en nombre allant de 300 jusqu'à 20 000 g/mol.

8. Composition selon la revendication 7, dans laquelle le dispersant acide et/ou basique est un oligomère ou un polymère ayant une masse moléculaire moyenne en nombre allant de 500 jusqu'à 5000 g/mol.

9. Composition selon l'une quelconque des revendications précédentes, dans laquelle les particules de matériau inorganique comportent un ou plusieurs parmi du phosphore, un matériau diélectrique, ou un conducteur.

10. Composition selon la revendication 9, dans laquelle les particules de matériau inorganique comportent un phosphore.

11. Dispositif d'affichage à plasma comprenant une composition de pâte selon l'une quelconque des revendications précédentes.

12. Dispositif d'affichage à plasma selon la revendication 11, dans lequel le dispositif d'affichage à plasma est un panneau d'affichage à plasma.

13. Utilisation d'une composition de pâte selon l'une quelconque des revendications 1 à 10 pour former l'une quelconque parmi une couche de phosphore, des nervures barrières, une couche diélectrique ou une électrode pour un panneau d'affichage à plasma.
